**Europäisches Patentamt**

**European Patent Office**

**Office européen des brevets**

(19)

(11) Veröffentlichungsnummer : **0 410 032 B1**

## (12) EUROPÄISCHE PATENTSCHRIFT

(45) Veröffentlichungstag der Patentschrift :
**14.10.92 Patentblatt 92/42**

(51) Int. Cl.$^5$ : **F16H 25/24**

(21) Anmeldenummer : **89113762.2**

(22) Anmeldetag : **26.07.89**

(54) **Mutter für Gewindespindel.**

(43) Veröffentlichungstag der Anmeldung :
**30.01.91 Patentblatt 91/05**

(45) Bekanntmachung des Hinweises auf die
Patenterteilung :
**14.10.92 Patentblatt 92/42**

(84) Benannte Vertragsstaaten :
**AT CH DE ES FR GB IT LI SE**

(56) Entgegenhaltungen :
**EP-A- 0 122 596**
**EP-A- 0 247 417**
**DE-A- 1 750 637**
**DE-A- 3 207 694**
**DE-A- 3 417 056**

(73) Patentinhaber : **FAG (Schweiz)**
**Aspstrasse 12**
**CH-8154 Oberglatt (CH)**

(72) Erfinder : **Keller, Rolf**
**Zürichstrasse 66**
**CH-8122 Pfaffenhausen (CH)**

(74) Vertreter : **Rehmann, Klaus H.**
**Postfach 1310 Hauptbahnhofstrasse**
**W-8720 Schweinfurt (DE)**

## Beschreibung

Die Erfindung bezieht sich auf eine Mutter nach dem Oberbegriff des Anspruchs 1.

Muttern der angegebenen Art sind z. B. aus der EP-A-01 22 596, DE-A-17 50 637 und DE-A-34 17 056 ersichtlich. Die in der EP-A-01 22 596 gezeigten Wälzlager sitzen mit ihrem Außenring in starren Halterungen und sichern so zwar eine exakte Führung der Spindel wenn alle Teile mit höchster Genauigkeit hergestellt sind. Letzteres ist aber oft nicht der Fall. Beim festen Einbau von ungenauen Teilen treten dann Zangskräfte auf, denn weder in radialer noch in axialer Richtung ist eine Anpassung an eventuelle Ungenauigkeiten möglich. Dadurch kann dann ebenfalls eine ungenaue Spindelführung eintreten und es kommt wegen der Zwangskräfte zu Überbelastungen der Wälzlager und zu erhöhter Abnützung der Kontaktflächen zwischen den Spindelnuten und den Innenringwulsten, was wiederum Ausfälle verursachen kann. Bei der Ausführung nach der DE-A-17 50 637 werden die Außenringe zwar erst nachträglich durch eine Vergießmasse radial festgelegt, dadurch werden aber nur größere Ungenauigkeiten beseitigt, und zwar auch nur die, die im Zeitraum des Festwerdens der Vergießmasse zufällig vorhanden sind. Eine beliebige Anpassung ist auch hier nicht möglich. Die in der DE-A-34 17 056 beschriebene Mutter soll die oben genannten Nachteile eliminieren, indem die Wälzlager in einer Halterung fixiert sind, die im Gehäuse so montiert ist, daß sich das Wälzlager den Ungenauigkeiten der Spindel und denen der Gewindegänge auch während des Betriebs anpassen kann.

Die beschriebene Lösung hat jedoch den großen Nachteil daß sie radial groß baut und dadurch für den Anwender unverhältnismäßig viel Platz beansprucht, denn die Außenringe werden über zusätzliche Tragringe in der streifenförmigen und daher relativ dicken Halterung befestigt. Außerdem sind die gezeigten balligen Schultern an der Halterung für die gewünschte Schwenkbarkeit kaum geeignet.

Es ist daher Aufgabe der Erfindung, eine Mutter nach dem Oberbegriff des Anspruchs 1 so weiter zu verbessern, daß die oben genannten Nachteile nicht eintreten und insbesondere eine problemlose Einstellung der Außenringe im Gehäuse zum Ausgleich eventueller Fertigungsfehler möglich ist, und zwar bei möglichst geringem Platzbedarf.

Die Lösung dieser Aufgabe ist im kennzeichnenden Teil des Anspruchs 1 angegeben. Die Ansprüche 2 und 3 enthalten spezielle Ausgestaltungen.

Da die Stirnseiten des Außenrings jeweils zwei diametral gegenüberliegende, kreisförmige Vorsprünge besitzen, die in entsprechend geformten Vertiefungen gelagert sind, wird eine Schwenkbarkeit des Lagers gegenüber den Spindelnuten zum Ausgleich von Fertigungs- und/oder Einbaufehlern ermöglicht, und zwar im Rahmen des allseitig zwischen Lager und Gehäuse vorgesehenen Spiels. In platzsparender Weise besitzt dabei das Gehäuse zumindest im Bereich der Vertiefungen Ausnehmungen, in die ein Teil des Außenrings hineinragt.

Die Außenabmessungen des Gehäuses werden also vom radial äußersten Punkt der exzentrisch angeordneten Außenringe bestimmt, wodurch sich der kleinstmögliche Radius der Mutter ergibt.

Statt die Vorsprünge direkt am Außenring anzubringen, ist es auch möglich, an dessen Stirnseiten Ringteile vorzusehen, die mit den Vorsprüngen versehen sind. In diesem Fall kann man handelsübliche Normallager verwenden.

Um die Wälzlager vor dem Eindrehen der Spindel in einfacher Weise in ein ungeteiltes Gehäuse einbringen zu können, ist es zweckmäßig, im Gehäuse durchgehende, schachtförmige Aussparungen in Größe des radialen Lagerprofils vorzusehen. Dabei ist es vorteilhaft, die Vertiefungen im Bereich dieser Aussparungen anzubringen.

Die Erfindung wird anhand von sieben Figuren näher erläutert:

Figur 1 zeigt eine Draufsicht mit Teilschnitt einer erfindungsgemäßen Mutter

Figur 2 zeigt einen Teilschnitt des Wälzlagers aus Figur 1

Figur 3 zeigt eine axiale Draufsicht auf einen Abschnitt des Wälzlagers nach Figur 2

Figur 4 zeigt eine radiale Draufsicht auf den Wälzlagerabschnitt gemäß Figur 3

Figur 5, 6 und 7 zeigen eine Variante des Wälzlagers gemäß den Figuren 2, 3 und 4.

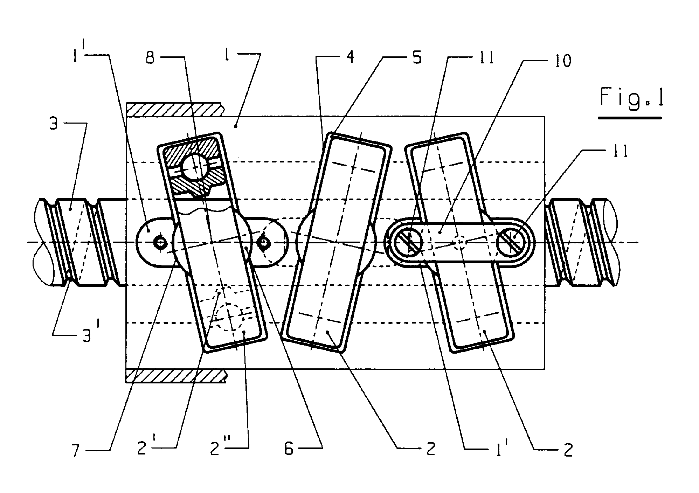

Gemäß Figur 1 besteht die Mutter aus dem Gehäuse 1 und drei radial versetzt und schräg angeordneten Wälzlagern 2, die in die Gewindenuten 3′ der Spindel 3 mit Wulsten 2′ eingreifen. Die Wälzlager 2 sind dabei in durchgehenden, schachtförmigen Aussparungen 4 mit Spiel 5 angeordnet. Dies ermöglicht die Verwendung von einteiligen Gehäusen 1 aus beliebigem Material, wobei gleichzeitig eine einfache Montage der Lager 2 ermöglicht wird.

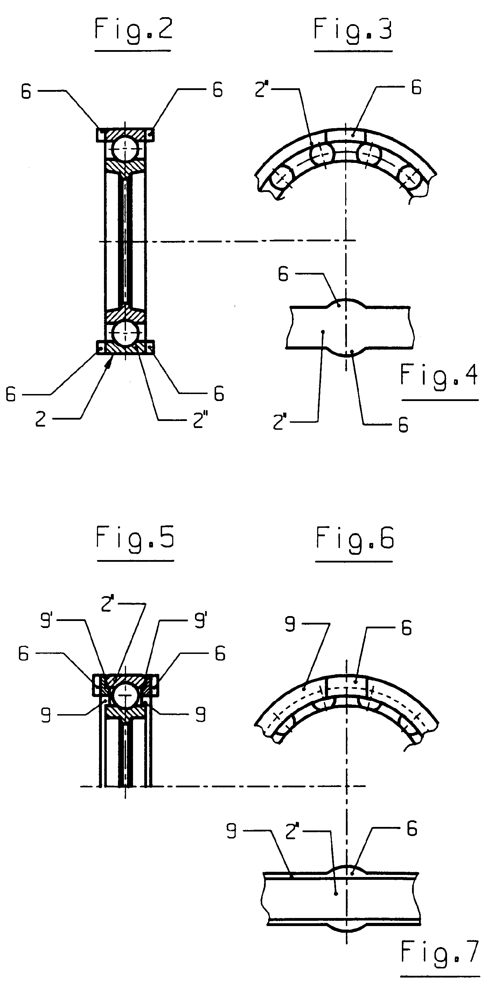

Die im Rahmen des Spiels 5 mögliche Schwenkbewegung zur Anpassung an Fertigungsfehler wird dadurch erreicht, daß an den Stirnseiten der Außenringe 2″ der Lager 2 an, wie auch aus den Figuren 2, 3 und 4 ersichtlich ist, diametral gegenüberliegenden Stellen Vorsprünge 6 angebracht sind. Diese sind kreisförmig gekrümmt und nahezu ohne Spiel in entsprechend geformten, am Gehäuse 1 angebrachten Vertiefungen 7 gelagert. Da der Mittelpunkt der dazugehörigen Kreise auf der Schwenkachse 8 der Lager 2 liegt, ist eine beliebige Einstellung des Lagers 2 um diese Achse 8 möglich.

Wie aus den Figuren 5, 6 und 7 hervorgeht, kann auch ein handelsübliches Wälzlager Verwendung finden. Das Lager 2 wird in diesem Fall an seinen Stirnseiten mit Ringteilen 9 ergänzt, an denen die kreisförmigen Vorsprünge 6 angeformt sind. Auch in diesem Fall ist eine einfache Montage ohne zusätzliche Haltemittel möglich, da die Ringteile 9 über einen Ansatz 9′ am Außenring 2″ und über die Vorsprünge 6 am Gehäuse 1 gehalten werden.

Es ist zweckmäßig, die Lager 2 gegeneinander elastisch radial anzustellen. Dies kann durch bekannte Federn erfolgen und wird hier, wie aus Figur 1 ersichtlich, durch eine einfache Blattfeder 10 erreicht, die elastisch auf die Mantelfläche des Außenrings 2″ drückt und beidseitig über Schrauben 11 in einer Vertiefung 1′ des Gehäuses 1 an letzterem befestigt ist, wobei die Einpreßkraft, mit der die Blattfedern 10 die Lager 2 in die Gewindenut 3′ der Spindel 3 eindrücken, ebenfalls über diese Schrauben 11 eingestellt werden kann.

## Patentansprüche

1. Mutter für Gewindespindel (3) mit mindestens einem in einem Gehäuse (1) angeordneten Wälzlager (2), das exzentrisch zur Spindelachse positioniert ist und mit mindestens einem Innenringwulst (2′) oder mindestens einem Zwischenbüchsenwulst in die Gewindenuten (3′) der Spindel abschnittsweise eingreift, wobei der Außenring (2″) des Wälzlagers mit allseitigem Spiel in dem Gehäuse schwenkbar und die Schwenkachse (8) in einer radialen Ebene zur Spindelachse angeordnet ist, dadurch gekennzeichnet, daß an den Stirnseiten des Außenrings (2″) jeweils zwei diametral gegenüberliegende, kreisförmig gekrümmte Vorsprünge (6) angebracht sind, die in entsprechend geformten Vertiefungen (7) am Gehäuse (1) schwenkbar gelagert sind, wobei der Mittelpunkt des dazugehörigen Kreises auf der Schwenkachse (8) des Wälzlagers (2) liegt.

2. Mutter nach Anspruch 1, dadurch gekennzeichnet, daß die kreisförmig gekrümmten Vorsprünge (6) an mit dem Außenring (2″) des Wälzlagers (2) verbundenen Ringteilen (9) angebracht sind.

3. Mutter nach Anspruch 1 oder 2, dadurch gekennzeichnet, daß im rohrförmigen Gehäuse (1) durchgehende, schachtförmige Aussparungen (4) in Größe des radialen Lagerprofils vorgesehen sind.

## Claims

1. A nut for a threaded spindle (3) with at least one roller bearing (2) arranged in a housing (1), which roller bearing is positioned eccentrically to the spindle axis and with at least one inner ring bead (2′) or at least one intermediate bush bead engages in the threaded grooves (3′) of the spindle in sections, wherein the outer ring (2″) of the roller bearing is arranged so as to be orientable with play on all sides in the housing and the swivel axis (8) is arranged in a radial plane to the spindle axis, characterised in that, on the end faces of the outer ring (2″), in each case two diametrically-opposed projections (6) are arranged which are curved in a circular shape and which are mounted so as to be orientable in correspondingly-shaped depressions (7) on the housing (1), and that the central point of the associated circle lies on the swivel axis (8) of the roller bearing (2).

2. A nut according to Claim 1, characterised in that the circularly-curved projections (6) are arranged on ring parts (9) which are connected with the outer ring (2″) of the roller bearing (2).

3. A nut according to Claim 1 or 2, characterised in that continuous, shaft-shaped recesses (4) having the size of the radial bearing section are provided in the tubular housing (1).

## Revendications

1. Ecrou pour broche filetée (3), comportant au moins un roulement (2) disposé dans un boîtier (1), positionné de façon excentrée par rapport à l'axe de la broche et s'engageant la partie par au moins un bourrelet (2′) de la bague intérieure ou par au moins un bourrelet d'une douille intercalaire, dans les rainures (3′) de filetage de la broche, étant entendu que la bague extérieure (2″) du roulement est disposée oscillante avec du jeu sur toutes ses faces, dans le boîtier et que les axes d'oscillation (8) sont disposés dans un plan radial par rapport à l'axe de la broche, caractérisé en ce que, sur la face d'attaque de la bague extérieure (2″) sont chaque fois disposées deux saillies (6), diamétralement opposées, ayant une courbure en arc de cercle, qui sont montées pivotantes dans des creux (7) de forme correspondante prévus dans le boîtier (1), étant entendu que le centre du cercle correspondant se trouve sur l'axe de pivotement (8) du roulement (2).

2. Ecrou suivant la revendication 1, caractérisé en ce que les saillies courbes, en forme d'arc de cercle, (6) sont disposées sur des pièces annulaires (9) liées avec la bague extérieure 2″ du roulement (2).

3. Ecrou suivant la revendication 1 ou la revendication 2, caractérisé en ce qu'il est prévu, dans le boîtier tubulaire (1), des évidements (4) traversants, en forme de puits, de la dimension du profil radial du roulement.

Fig.1

Fig.2

Fig.3

Fig.4

Fig.5

Fig.6

Fig.7